# EUROPÄISCHE PATENTSCHRIFT

(11) **EP 1 078 568 B1**
(45) Veröffentlichungstag und Bekanntmachung des Hinweises auf die Patenterteilung: **17.11.2004**
(21) Anmeldenummer: 00116588.5
(22) Anmeldetag: 01.08.2000
(51) Int. Cl.: A01F 7/06

(54) **Gutbearbeitungseinrichtung für einen Mähdrescher**
Device for the treatment of crop for a combine harvester
Dispositif pour le traitment de récolte pour une moissonneuse-batteuse

(30) Priorität: 20.08.1999 US 378773
(43) Veröffentlichungstag der Anmeldung: 28.02.2001
(73) Patentinhaber: DEERE & COMPANY, Moline, Illinois 61265-8098 (US)
(72) Erfinder: Moriarty, Kevin Joseph, Davenport, IA 52803 (US)
(74) Vertreter: Holst, Sönke, Dr.

(56) Entgegenhaltungen:
- DE-A- 19 722 079
- US-A- 4 408 618
- US-A- 5 445 563
- US-A- 5 688 170

## Beschreibung

Die Erfindung betrifft eine Gutbearbeitungseinrichtung für einen Mähdrescher, die ein Gehäuse und einen Rotor aufweist, der um eine Rotorachse innerhalb des im wesentlichen rohrförmigen Gehäuses drehbar gelagert ist, wobei das Gehäuse eine Gehäuseachse definiert.

Axialmähdrescher mit rotierenden Gutbearbeitungseinheiten sind im Stand der Technik bekannt. Beispiele sind in der US 5 445 563 A und der US 5 688 170 A gezeigt, die auf die Anmelderin der vorliegenden Anmeldung zurückgehen. Diese zwei Druckschriften offenbaren rotierende Gutbearbeitungseinheiten, die zwei oder mehr Abschnitte aufweisen. Die räumliche Beziehung zwischen der Achse des Rotors und der Achse des Gehäuses ändert sich von einem Abschnitt zum anderen Abschnitt. Bei beiden Druckschriften ist die Achse des Rotors in der vom Einlass des Gehäuses zum Auslass des Gehäuses verlaufenden Richtung immer weiter von der Achse des Gehäuses versetzt. Das wird durch abrupte Übergänge im Aufbau des Gehäuses von einem Abschnitt auf den anderen Abschnitt erreicht, in denen sich die Form des Gehäuses ändert. Wo sich die Form des Gehäuses ändert, erhöht sich die Achse des Gehäuses relativ zur Achse des Rotors. Der Spalt zwischen Rotor und Oberseite des Gehäuses wächst ebenfalls bei jeder Stufe im Gehäuse an.

Die der Erfindung zugrunde liegende Aufgabe wird darin gesehen, eine verbesserte Gutbearbeitungseinheit bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, einen Axialmähdrescher mit einem Rotor zu versehen, dessen Achse relativ zur Gehäuseachse geneigt ist und relativ zu der Gehäuseachse in der Gutflussrichtung, die von einem einlassseitigen Ende zu einem auslassseitigen Ende des Gehäuses verläuft, divergiert. Die Gehäuseachse und die Rotorachse schließen somit einen Winkel ein.

Auf diese Weise kann man einen Axialmähdrescher mit einem Spalt zwischen dem Rotor und der Oberseite des Gehäuses erhalten, dessen Größe in Gutflussrichtung ansteigt, wobei das Gehäuse eine im wesentlichen gleichförmige Form ohne abrupte Übergänge aufweist.

In an sich bekannter Weise kann das Gehäuse mit einem Beschickungsabschnitt, einem Dreschabschnitt und einem Trennabschnitt ausgestattet sein. Denkbar ist aber auch, es nur mit einem Trennabschnitt und gegebenenfalls einem Beschickungsabschnitt zu versehen, und einen konventionellen Dreschkorb vorzuschalten.

Vorzugsweise schneiden sich die Rotorachse und die Gehäuseachse am einlassseitigen Ende des Gehäuses, so dass das Gehäuse und der Rotor dort konzentrisch angeordnet ist.

In der bevorzugten Ausführungsform weist das Gehäuse einen kreisförmigen Querschnitt auf. Die divergierenden Achsen von Rotor und Gehäuse bewirken bei einem kreisförmigen Gehäuse denselben Nutzen wie die Gehäuse der oben genannten Druckschriften, nämlich dass ein anwachsender Spalt zwischen der Oberseite des Gehäuses und dem Rotor hergestellt wird, ohne dass Übergänge in der Form des Gehäuses notwendig wären. Dadurch wird der Aufbau und die Herstellung des Gehäuses vereinfacht. Außerdem besteht bei einem Gehäuse mit kreisförmigem Querschnitt die Möglichkeit, die Erfindung bei einem rotierenden Gehäuse einzusetzen. Ein rotierendes Gehäuse ist bei den rotierenden Gutbearbeitungseinrichtungen der oben genannten Druckschriften nicht möglich, da dort das Gehäuse wegen seines nicht-kreisförmigen Querschnitts stationär sein muss. Die vorliegende Erfindung mit einer von der Gehäuseachse divergierenden Rotorachse kann jedoch auch mit einem Gehäuse realisiert werden, das abrupte Übergänge zwischen den einzelnen Abschnitten aufweist. Ein einem derartigen Fall würde sich der Spalt zwischen Rotor und Gehäuse von einem Abschnitt zum anderen Abschnitt unterscheiden, während die Rotorachse weiterhin in jedem Abschnitt von der Gehäuseachse divergiert. Zusätzlich kann die Erfindung mit einem Rotorgehäuse mit elliptischem oder länglichen Querschnitt verwendet werden, falls gewünscht.

In der Regel ist die Rotorachse relativ zur Gehäuseachse in Gutflussrichtung nach unten geneigt, so dass der Spalt zwischen dem Rotor und der Oberseite des Gehäuses über die Länge des Gehäuses in der zum auslassseitigen Ende des Gehäuses verlaufenden Richtung allmählich anwächst. Der ansteigende Spalt zwischen dem Rotor und dem Gehäuse wird anders als in den oben erwähnten Druckschriften ohne abrupte Übergänge in der Form des Gehäuses erzielt. Gleichzeitig sinkt der Spalt zwischen dem Rotor und der Unterseite des Gehäuses kontinuierlich ab, so dass sich am auslassseitigen Ende des Gehäuses ein größerer Spalt zwischen Rotor und der Oberseite des Gehäuses ergibt als zwischen Rotor und Unterseite des Gehäuses.

Schließlich ist denkbar, das Maß, um das die einzelnen Guteingriffselemente des Rotors von seiner Oberfläche abstehen, über wenigstens einen Teil der Länge des Rotors in Gutflussrichtung kleiner werden zu lassen. Es werden somit unterschiedlich weit von der Oberfläche des Rotors abstehende Guteingriffselemente verwendet, die einen wenigstens näherungsweise konstanten Abstand zwischen Guteingriffselement und einem mit ihm zusammenwirkenden Dreschkorb oder Rost ermöglichen.

In den Zeichnungen ist ein nachfolgend näher beschriebenes Ausführungsbeispiel der Erfindung dargestellt. Es zeigt:
- Fig. 1: eine Seitenansicht eines landwirtschaftlichen Mähdreschers mit einer erfindungsgemäßen rotierenden Gutbearbeitungseinheit;
- Fig. 2: einen geschnittene Seitenansicht einer erfindungsgemäßen Gutbearbeitungseinheit;
- Fig. 3: einen Querschnitt des Beschickungsabschnitts der rotierenden Gutbearbeitungseinheit entlang der Linie 3-3 der Figur 2;
- Fig. 4: einen Querschnitt des Dreschabschnitts der rotierenden Gutbearbeitungseinheit entlang der Linie 4-4 der Figur 2; und
- Fig. 5: einen Querschnitt des Trennabschnitts der rotierenden Gutbearbeitungseinheit entlang der Linie 5-5 der Figur 2.

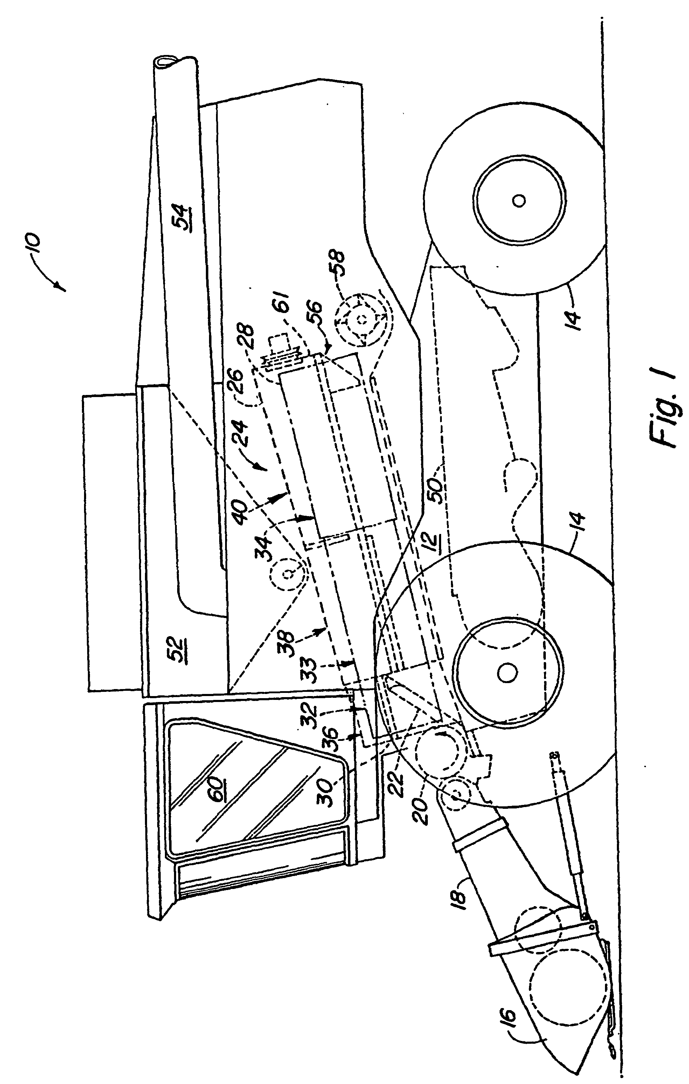

Die Figur 1 zeigt einen landwirtschaftlichen Mähdrescher 10 mit einem tragenden Aufbau 12, der mit dem Erdboden im Eingriff befindliche Elemente 14 aufweist, die in der Form von Reifen dargestellt sind. Alternativ können Gleisketten an Stelle der Räder benutzt werden. Ein Schneidwerk 16 wird verwendet, um Gut zu ernten und es einem Schrägförderer 18 zuzuführen. Das geerntete Gut wird durch den Schrägförderer 18 einer Leittrommel 20 zugeführt. Die Leittrommel 20 leitet das Gut nach oben in eine rotierende Gutbearbeitungseinheit 24. Die rotierende Gutbearbeitungseinheit 24 ist zwischen Seitenwänden des Mähdreschers 10 angeordnet. Die Seitenwände bilden einen Teil des tragenden Aufbaus 12 des Mähdreschers 10.

Die rotierende Gutbearbeitungseinheit 24 umfasst ein Gehäuse 26 und einen im Gehäuse 26 angeordneten Rotor 28. Das geerntete Gut tritt in das Gehäuse 26 durch einen Einlass 22 am einlassseitigen Ende 30 des Gehäuses 26 ein. Der Rotor 28 ist mit einem Beschickungsabschnitt 32, einem Dreschabschnitt 33 und einem Trennabschnitt 34 ausgestattet. Das Gehäuse 26 des Rotors 28 hat einen entsprechenden Beschickungsabschnitt 36, einem Dreschabschnitt 38 und einem Trennabschnitt 40.

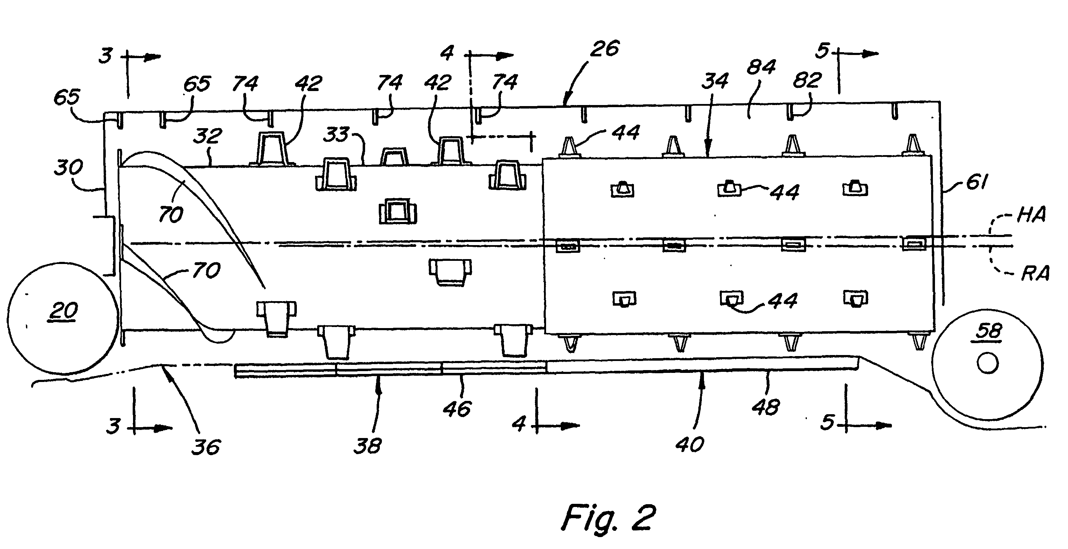

Sowohl der Dreschabschnitt 33 als auch der Trennabschnitt 34 des Rotors 28 sind mit Guteingriffselementen 42 bzw. 44 versehen, siehe Figur 2. Der Dreschabschnitt 38 des Gehäuses 26 ist mit einem Dreschkorb 46 ausgestattet, während der Trennabschnitt 40 des Gehäuses 26 mit einem Rost 48 versehen ist. Korn und Spreu, die aus der Gutmatte freigesetzt wurden, fallen durch den Dreschkorb 46 und das Rost 48. Der Dreschkorb 46 und das Rost 48 verhindern den Durchtritt von Gutteilchen, die größer als Korn oder Spreu sind, so dass diese nicht in das Reinigungssystem 50 des Mähdreschers 10 unterhalb der rotierenden Gutbearbeitungseinheit 24 gelangen können.

Wie in Figur 1 dargestellt, werden Korn und Spreu, die durch den Dreschkorb 46 und das Rost 48 fallen, dem Reinigungssystem 50 zugeführt, welches die Spreu vom Korn entfernt. Das saubere Korn wird dann von einem Elevator (nicht gezeigt) dem Korntank 52 zugeführt, aus dem es durch einen Entladeschneckenförderer 54 einem Lastwagen oder Anhänger zugeführt werden kann. Stroh, das das Ende 61 des Gehäuses 26 erreicht, wird durch einen Auslass 56 einer Auswurftrommel 58 zugeführt. Die Auswurftrommel 58 wirft das Stroh an der Rückseite des Mähdreschers 10 aus. Das Ende 61 ist somit das auslassseitige Ende des Gehäuses 26. Das Erntegut bewegt sich durch die rotierende Gutbearbeitungseinheit in einer Gutflussrichtung vom einlassseitigen Ende 30 zum auslassseitigen Ende des Gehäuses 26. Der Betrieb des Mähdreschers 10 wird von einer Bedienerkabine 60 aus gesteuert.

Der Rotor 28 definiert eine mittige Rotorachse RA. Die Rotorachse RA ist eine gerade Linie, die durch die Zentren des Beschickungsabschnitts 32, des Dreschabschnitts 33 und des Trennabschnitts 34 des Rotors 28 verläuft.

Das Gehäuse 26 des Rotors 28 definiert eine Gehäuseachse HA. Die Gehäuseachse HA ist eine gerade Linie, die durch den Beschickungsabschnitt 36, den Dreschabschnitt 38 und den Trennabschnitt 40 des Gehäuses verläuft.

Der Rotor 28 und das Gehäuse 26 des Rotors 28 sind relativ zueinander derart orientiert, dass die Rotorachse RA und die Gehäuseachse HA voneinander in der Gutflussrichtung vom einlassseitigen Ende 30 zum auslassseitigen Ende 61 des Gehäuses 26 divergieren. In der in Figur 2 gezeigten Ausführungsform sind der Rotor 28 und das Gehäuse 26 am einlassseitigen Ende 30 näherungsweise zueinander konzentrisch (die Gehäuseachse HA und die Rotorsachse RA schneiden sich) und die Achsen RA und HA divergieren zum auslassseitigen Ende 61. Die zwei Achsen müssen sich am einlassseitigen Ende 30 jedoch nicht schneiden, sondern könnten sowohl am einlassseitigen Ende 30 als auch am auslassseitigen Ende 61 zueinander versetzt sein.

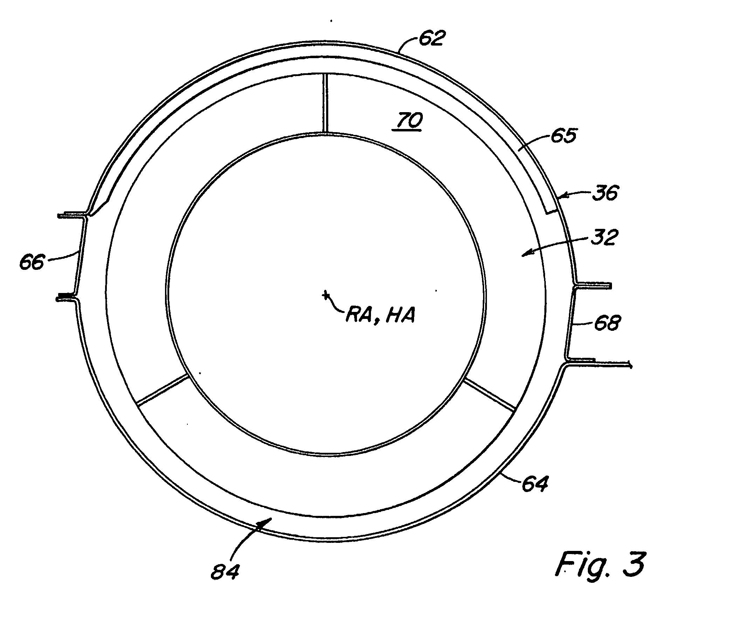

Wie in Figur 3 erkennbar ist, ist der Beschickungsabschnitt 36 des Gehäuses 26 mit einer geschlossenen Abdeckung 62 und einem geschlossenen Boden 64 ausgestattet. Die Abdeckung 62 ist mit wendelförmigen, das Gut führenden Kufen 65 versehen. Die Abdeckung 62 und der Boden 64 sind an axialen Schienen 66, 68 angeschraubt. Der Rotor 26 ist mit wendelförmigen Kufen 70 ausgestattet. Der vordere Abschnitt des geschlossenen Bodens 64 ist mit einem Einlassübergangsabschnitt 69 ausgestattet, der im wesentlichen identisch mit dem in der US 5 344 367 A offenbarten Einlassübergangsabschnitt ist. Die geschlossene Abdeckung 62 des Beschickungsabschnitts 36 definiert die Gehäuseachse HA im Beschickungsabschnitt 36.

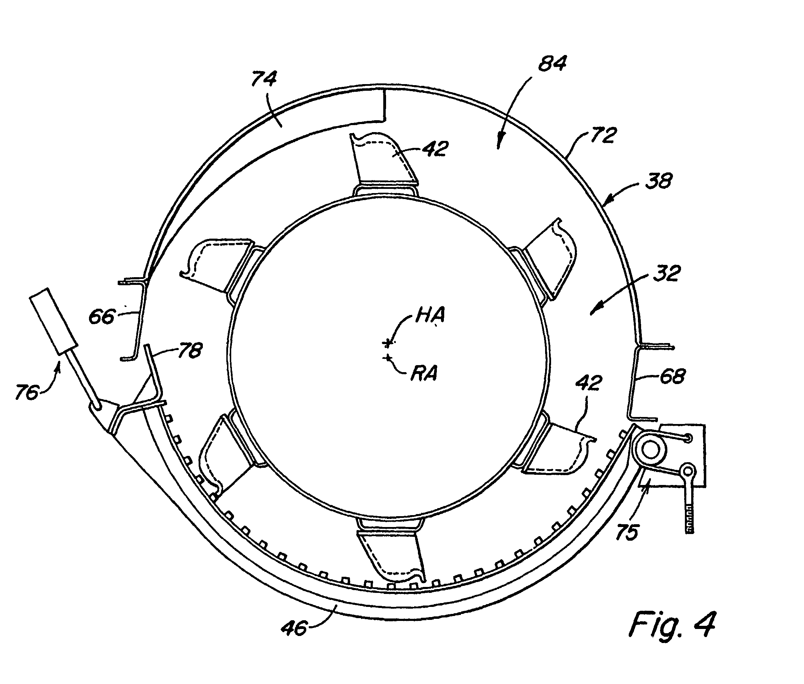

Wie in Figur 4 gezeigt wird, ist der Dreschabschnitt 38 mit einer geschlossenen Dreschabdeckung 72 versehen, die wendelförmige, das Gut führende Kufen 74 aufweist. Die Dreschabdeckung 72 ist an den axialen Schienen 66, 68 angeschraubt. Der Dreschkorb 46 ist am Schwenkpunkt 75 unterhalb der Schiene 68 schwenkbar am Rahmen des Mähdreschers 10 befestigt. Ein Einstellzusammenbau 76 zum Einstellen des Dreschkorbspalts ist am Rahmen des Mähdreschers 10 unterhalb der Schiene 66 befestigt. Der Dreschkorb 46 weist eine geschlossene Verlängerung 78 auf.

Die Dreschabdeckung 72 definiert die Gehäuseachse HA im Dreschabschnitt 38 des Gehäuses 26. Die Gehäuseachse HA wird durch die Dreschabdeckung 72 und nicht durch den Dreschkorb 46 definiert. Da die Dreschabdeckung 72 an Ort und Stelle fixiert ist, ist die Gehäuseachse HA relativ zur Rotorachse RA fest. Der Dreschkorb 46 ist relativ zum Rotor 28 durch den Einstellzusammenbau 76 beweglich. Daher ist die Achse des Dreschkorbs 46 nicht relativ zur Rotorachse RA fest.

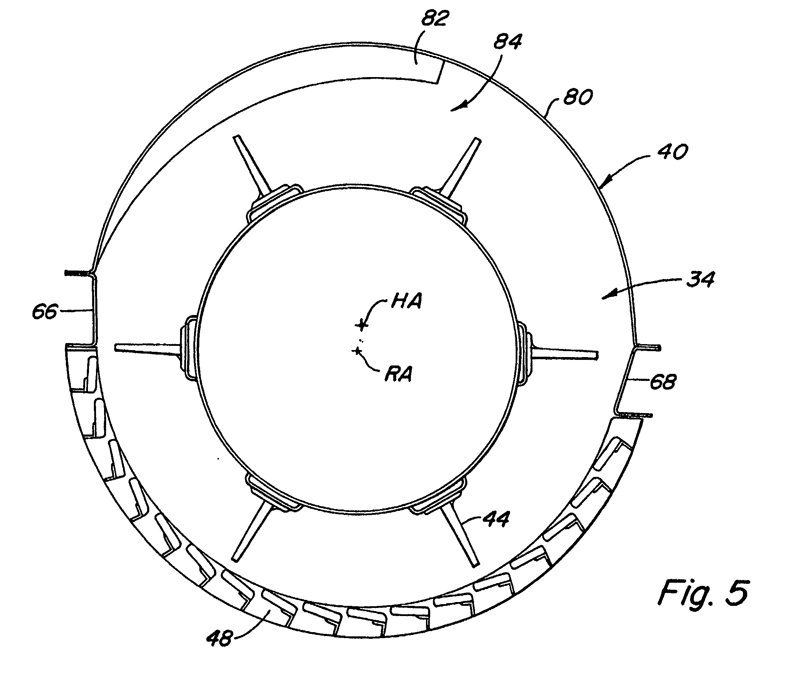

Der Trennabschnitt 40 ist mit einer Trennabdeckung 80 ausgestattet, die wendelförmige Kufen aufweist, wie in Figur 5 wiedergegeben wird. Die Trennabdeckung 80 ist auf an den Schienen 66, 68 angeschraubt und ist ähnlich mit dem in der US 4 875 891 A offenbarten Rost. Die Trennabdeckung 80 definiert die Gehäuseachse HA über den Trennabschnitt. In der bevorzugten Ausführungsform ist der Querschnitt des Gehäuses 26 kreisförmig und die Gehäuseachse HA bildet eine gerade Linie, wie in Figur 2 gezeigt.

Das Gehäuse 26 ist vom Rotor 28 beabstandet und bildet einen ringförmigen Spalt 84 zwischen Rotor 28 und Gehäuse 26, durch den geerntetes Gut fließen kann, wenn es sich in der Gutflussrichtung vom einlassseitigen Ende 30 zum auslassseitigen Ende 61 des Gehäuses 26 bewegt. Wenn das Gut sich auf das auslassseitige Ende 61 des Gehäuses 26 zu bewegt, wächst die Größe des Spalts zwischen dem Rotor 28 und dem oberen Bereich des Gehäuses 26 an, während die Größe des Spalts zwischen dem Rotor 28 und dem unteren Bereich des Gehäuses 26 abnimmt. Als ein Ergebnis der sich ändernden Größe des Spalts könnte die Größe der Guteingriffselemente 42 und 44 sich in axialer Richtung über die Länge des Rotors 26 ändern, so dass die Guteingriffselemente 42, die dem einlassseitigen Ende 30 am nächsten angeordnet sind, weiter radial über die Oberfläche des Rotors 26 hinausragen, als die Guteingriffselemente 42, die dem auslassseitigen Ende 61 am nächsten sind. Der sich ändernde radiale Überstand der Guteingriffselemente 42 von der Oberfläche des Rotors 26 ermöglicht, dass der Spalt zwischen den Guteingriffselementen 42 und dem Dreschkorb 46 über die gesamte Länge des Dreschabschnitts 38 konstant bleibt. Ebenso könnten die Guteingriffselemente 44 über die Länge des Trennabschnitts 40 einen unterschiedlichen radialen Überstand von der Oberfläche des Rotors 26 aufweisen. Alternativ können die Guteingriffselemente 44 einen konstanten radialen Überstand aufweisen, der kurz genug ist, beim geringsten Abstand zwischen Rotor 26 und dem Rost 48 ein Zusammenstoßen mit dem Rost 48 zu vermeiden.

Ein Vorteil der divergierenden Gehäuse- und Rotorachsen ist die Möglichkeit, den Spalt zwischen dem Rotor 26 und der Oberseite des Gehäuses 28 in Richtung auf das auslassseitige Ende 61 anwachsen zu lassen, wobei das Gehäuse 28 einfach ist und eine gleichförmige, vorzugsweise kreisförmige Form aufweist. Die Erfindung bewirkt ein konstantes, gleichförmiges Anwachsen des Spalts zum auslassseitigen Ende 61 hin. Die Erfindung kann jedoch mit einem Gehäuse 28 benutzt werden, das keinen kreisförmigen Querschnitt aufweist, oder das getrennte Abschnitte aufweist, wobei die Form des Gehäuses einen abrupten Übergang aufweist, wie in den oben diskutierten Druckschriften. In einem derartigen Fall würde die Rotorachse von der Gehäuseachse in den einzelnen Abschnitten in der beschriebenen Weise divergieren.

## Patentansprüche

1. Gutbearbeitungseinrichtung für einen Mähdrescher (10), die ein Gehäuse (28) und einen Rotor (26) aufweist, der um eine Rotorachse (RA) innerhalb des im wesentlichen rohrförmigen Gehäuses (28) drehbar gelagert ist, wobei das Gehäuse (28) eine Gehäuseachse (HA) definiert, **dadurch gekennzeichnet, dass** das Gehäuse (28) und der Rotor (26) derart relativ zueinander angeordnet sind, dass die Rotorachse (RA) von der Gehäuseachse (HA) in einer Gutflussrichtung divergiert.

2. Gutbearbeitungseinrichtung nach Anspruch 1, **dadurch gekennzeichnet, dass** das Gehäuse (28) vom Rotor (26) derart beabstandet ist, dass ein ringförmiger Spalt zwischen Gehäuse (28) und Rotor (26) entsteht, durch den Gut in der Gutflussrichtung von einem einlassseitigen Ende (30) zu einem auslassseitigen Ende (61) des Gehäuses (28) fließen kann.

3. Gutbearbeitungseinrichtung nach Anspruch 1 oder 2, **dadurch gekennzeichnet, dass** das Gehäuse (28) und der Rotor (28) jeweils einen Beschickungsabschnitt (32, 36) und/oder Dreschabschnitt (33, 38) und/oder Trennabschnitt (34, 40) aufweisen.

4. Gutbearbeitungseinrichtung nach einem der Ansprüche 1 bis 3, **dadurch gekennzeichnet, dass** der Rotor (26) und das Gehäuse (28) am einlassseitigen Ende (30) des Gehäuses (28) im wesentlichen konzentrisch sind.

5. Gutbearbeitungseinrichtung nach einem der Ansprüche 1 bis 4, **dadurch gekennzeichnet, dass** das Gehäuse (28) einen im wesentlichen kreisförmigen Querschnitt aufweist.

6. Gutbearbeitungseinrichtung nach einem der Ansprüche 1 bis 5, **dadurch gekennzeichnet, dass** das Gehäuse (28) und der Rotor (26) derart relativ zueinander angeordnet sind, dass der Abstand zwischen einem oberen Bereich des Gehäuses (28) und dem Rotor (26) in der Gutflussrichtung allmählich ansteigt.

7. Gutbearbeitungseinrichtung nach einem der Ansprüche 1 bis 6, **dadurch gekennzeichnet, dass** das Gehäuse (28) und der Rotor (26) derart relativ zueinander angeordnet sind, dass der Abstand zwischen einem unteren Bereich des Gehäuses (28) und dem Rotor (26) in der Gutflussrichtung allmählich absinkt.

8. Gutbearbeitungseinrichtung nach einem der Ansprüche 1 bis 7, **dadurch gekennzeichnet, dass** die Rotorachse (RA) am auslassseitigen Ende (61) des Gehäuses (28) unterhalb der Gehäuseachse (HA) angeordnet ist, so dass sich ein größerer freier Raum zwischen dem Rotor (26) und einem oberen Abschnitt des Gehäuses (28) ergibt als zwischen dem Rotor (26) und einem unteren Abschnitt des Gehäuses (28).

9. Gutbearbeitungseinrichtung nach einem der Ansprüche 1 bis 8, **dadurch gekennzeichnet, dass** der Rotor (26) mit einer Vielzahl an Guteingriffselementen (42, 44) ausgestattet ist, die radial vom Rotor (26) abstehen, und dass das Ausmaß des radialen Überstands der Guteingriffselemente (42, 44) von der Oberfläche des Rotors (26) in der Gutflussrichtung über wenigstens einen Teil der axialen Länge des Rotors (26) absinkt.

## Claims

1. A crop processing unit for a combine (10), the crop processing unit comprising a housing (28) and a rotor (26) which is rotatably supported within the generally tubular housing (28) for rotation about a rotor axis (RA), the housing (28) defining a housing axis (HA), **characterized in that** the housing (28) and the rotor (26) are positioned relative to one another such that the rotor axis (RA) diverges from the housing axis (HA) in the crop flow direction.

2. A crop processing unit according to claim 1, **characterized in that** the housing (28) is spaced from the rotor (26) to form an annular space between the housing (28) and the rotor (26) through which crop material can flow in the crop flow direction from an inlet end (30) to an outlet end (61) of the housing (28).

3. A crop processing unit according to claim 1 or 2, **characterized in that** the housing (28) and the rotor (28) each comprise an infeed section (32, 36) and/or a threshing section (33, 38) and/or a separating section (34, 40).

4. A crop processing unit according to one of claims 1 to 3, **characterized in that** the rotor (26) and the housing (28) are generally concentric at the inlet end (30) of the housing (28).

5. A crop processing unit according to one of claims 1 to 4, **characterized in that** the housing (28) is generally circular in cross section.

6. A crop processing unit according to one of claims 1 to 5, **characterized in that** the rotor (26) and the housing (28) are disposed relative to one another such that the distance between a top portion of the housing (28) and the rotor (26) gradually increases in the crop flow direction.

7. A crop processing unit according to one of claims 1 to 6, **characterized in that** the rotor (26) and the housing (28) are disposed relative to one another such that the distance between a bottom portion of the housing (28) and the rotor (26) gradually decreases in the crop flow direction.

8. A crop processing unit according to one of claims 1 to 7, **characterized in that** the rotor axis (RA) is below the housing axis (HA) at the outlet end (61) of the housing (28) such that a larger free space is obtained between the rotor (26) and an upper portion of the housing (28) than between the rotor (26) and a lower portion of the housing (28).

9. A crop processing unit according to one of claims 1 to 8, **characterized in that** the rotor (26) is provided with a multitude of crop engaging elements (42, 44) projecting radially from the rotor (26), and that the extent of radially extension of the crop engaging elements (42, 44) decreases in the crop flow direction over at least a portion of the axial length of the rotor (26).

## Revendications

1. Système de traitement de récolte pour une moissonneuse-batteuse (10) comportant un carter (28) et un rotor (26) monté rotatif autour d'un axe de rotor (RA) à l'intérieur du carter (28) de forme pratiquement cylindrique, le carter (28) définissant un axe de carter (HA), **caractérisé en ce que** le carter (28) et le rotor (26) sont disposés l'un par rapport à l'autre de manière telle que l'axe de rotor (RA) diverge de l'axe de carter (HA) dans une direction de cheminement de la récolte.

2. Système de traitement de récolte selon la revendication 1, **caractérisé en ce que** le carter (28) est espacé du rotor (26) d'une manière telle qu'entre le carter (28) et le rotor (26) se crée un espace annulaire à travers lequel peut s'écouler la récolte dans la direction de cheminement de la récolte depuis une extrémité d'introduction (30) jusqu'à une extrémité d'évacuation (61) du carter (28).

3. Système de traitement de récolte selon la revendication 1 ou 2, **caractérisé en ce que** le carter (28) et le rotor (26) présentent chacun une section de chargement (32, 36) et une section de battage (33, 38) et/ou une section de séparation (34, 40).

4. Système de traitement de récolte selon l'une des revendications 1 à 3, **caractérisé en ce que** le rotor (26) et le carter (28) sont pratiquement concentriques à l'extrémité d'introduction (30) du carter (28).

5. Système de traitement de récolte selon l'une des revendications 1 à 4, **caractérisé en ce que** le carter (28) présente une section transversale pratiquement circulaire.

6. Système de traitement de récolte selon l'une des revendications 1 à 5, **caractérisé en ce que** le carter (28) et le rotor (26) sont disposés l'un par rapport à l'autre de manière telle que l'espace entre une région supérieure du carter (28) et le rotor (26) augmente graduellement dans la direction de cheminement de la récolte.

7. Système de traitement de récolte selon l'une des revendications 1 à 6, **caractérisé en ce que** le carter (28) et le rotor (26) sont disposés relativement l'un par rapport à l'autre d'une manière telle que l'espace entre une zone inférieure du carter (28) et le rotor (26) diminue graduellement dans la direction de cheminement de la récolte.

8. Système de traitement de récolte selon l'une des revendications 1 à 7, **caractérisé en ce que** l'axe de rotor (RA) à l'extrémité d'évacuation (61) du carter (28) est situé au-dessous de l'axe de carter (HA) de telle sorte qu'il en résulte un espace libre plus important entre le rotor (26) et une section supérieure du carter (28) qu'entre le rotor (26) et une section inférieure du carter (28).

9. Système de traitement de récolte selon l'une des revendications 1 à 8, **caractérisé en ce que** le rotor (26) est pourvu d'une pluralité d'éléments d'attaque de récolte (42, 44) qui se dressent radialement depuis le rotor (26), et **en ce que** le degré de dépassement radial des éléments d'attaque de récolte (42, 44) depuis la surface du rotor (26) diminue dans la direction de cheminement de la récolte sur au moins une portion de la longueur axiale du rotor (26).
